# EUROPEAN PATENT APPLICATION

(11) **EP 4 640 866 A1**
(43) Date of publication of application: **29.10.2025**
(21) Application number: 23907308.3
(22) Date of filing: 21.09.2023
(51) Int. Cl.: C22C 38/02, C22C 38/04, C22C 38/06, C22C 38/14, C22C 38/00, C22C 38/12, C22C 38/16, C22C 38/34, C21D 8/12

(54) **NON-ORIENTED ELECTRICAL STEEL SHEET AND METHOD FOR MANUFACTURING SAME**

(30) Priority: 21.12.2022 KR 20220180982
(71) Applicant: POSCO Co., Ltd, Pohang-si, Gyeongsangbuk-do 37859 (KR)
(72) Inventor: LEE, Hunju, Pohang-si, Gyeongsangbuk-do 37859 (KR); LEE, Sangwoo, Pohang-si, Gyeongsangbuk-do 37859 (KR); KIM, Yun Su, Pohang-si, Gyeongsangbuk-do 37859 (KR)
(74) Representative: Meissner Bolte Partnerschaft mbB
(86) International application number: PCT/KR2023/014378
(87) International publication number: WO 2024/136022

(57) **Abstract**

An embodiment of the present invention provides a non-oriented electrical steel sheet including: in wt%, Si: 2.5 to 4.5%, Al: 0.1 to 1.5%, Mn: 0.1 to 0.5%, with the balance being Fe and inevitable impurities.

In the non-oriented electrical steel sheet according to the embodiment of the present invention, when a texture is represented by ODF, an orientation having the highest intensity is positioned within 10⁰ of {001}<130>.

## Description

### [Technical Field]

An embodiment of the present invention relates to a non-oriented electrical steel sheet and a method for manufacturing the same. Specifically, an embodiment of the present invention relates to a non-oriented electrical steel sheet having improved magnetism by developing grains having a specific orientation through thermal history control during hot-rolled sheet annealing, and a method for manufacturing the same.

### [Background Art]

A non-oriented electrical steel sheet is mainly used in a motor that converts electrical energy to mechanical energy, and an excellent magnetic characteristic of the non-directional electrical steel sheet is required to achieve high efficiency while the motor converts the electrical energy to the mechanical energy. In particular, recently, as environmentally-friendly vehicles driven by motors instead of internal combustion engines have been gaining attention, the demand for non-oriented electrical steel sheets used as driving motor core materials is increasing, and for this purpose, non-oriented electrical steel sheets with excellent magnetic properties and strength are required.

The magnetic properties of non-oriented electrical steel sheets are mainly evaluated by iron loss and magnetic flux density. The iron loss means energy loss occurring at a specific magnetic flux density and frequency, and the magnetic flux density means a degree of magnetization obtained in a specific magnetic field. Lower iron loss allows for more energy-efficient motors to be manufactured under the same conditions, and higher magnetic flux density allows for smaller motors or reduced copper loss. Therefore, by using non-oriented electrical steel sheets with low iron loss and high magnetic flux density, a driving motor with excellent efficiency and torque may be manufactured, thereby improving the driving range and output of environmentally-friendly vehicles.

Depending on operational conditions of the motor, the characteristics of the non-oriented electrical steel sheet that should be considered is also varied. The general standard for evaluating the characteristics of non-oriented electrical steel sheets used in motors is widely used as W15/50, which is the iron loss when a 1.5T magnetic field is applied at a commercial frequency of 50Hz. However, in the case of non-oriented electrical steel sheets with a thickness of 0.35 mm or less used in environmentally-friendly vehicle driving motors, magnetic properties are often important at low magnetic fields of 1.0 T or less and high frequencies of 400 Hz or higher, so the properties of non-oriented electrical steel sheets are often evaluated using the W10/400 iron loss.

A commonly used method to improve the magnetic properties of non-oriented electrical steel sheets is to add alloying elements such as Si, Al, and Mn. When the specific resistance of the steel increases through the addition of these alloying elements, the eddy current loss decreases lowering the overall iron loss. Additionally, these alloying elements may be dissolved in iron as substitutional elements to cause a strengthening effect, thereby increasing strength. On the contrary, as the amount of alloy elements such as Si, Al, and Mn added increases, the magnetic flux density is deteriorated and brittleness increases, and when more than a certain amount thereof is added, it may not be cold rolled and may not be able to be commercially produced. In particular, as the thickness of electrical steel sheets is reduced, high-frequency iron loss becomes better, but the reduction in rollability due to brittleness becomes a critical problem. The maximum total content of Si, Al, and Mn that may be commercially produced is known to be approximately 4.5%, and by optimizing the content of trace elements, it is possible to produce the highest quality non-oriented electrical steel with excellent magnetism and strength.

Depending on the design intent of the motor, electrical steel sheets with improved strength are sometimes used even if the magnetic properties are somewhat degraded, and methods for manufacturing electrical steel sheets for this purpose include methods that utilize the precipitation of interstitial elements and methods that reduce the grain size. Mainly, when trying to increase the rotation speed by miniaturizing the motor or to enhance the effect of the permanent magnet inserted into the rotor, a rotor manufactured from electrical steel sheet with significantly improved strength is used even if the magnetic properties of the electrical steel sheet are somewhat deteriorated. In this case, forming fine precipitates containing interstitial solute atoms such as C, N, and S may effectively increase strength but has the disadvantage of rapidly deteriorating iron loss, which may actually reduce the efficiency of the motor. In addition, the method of reducing the grain size has a disadvantage in that the quality deviation of mass-produced products increases due to increased unevenness in the steel sheet material caused by the inclusion of unrecrystallized portions.

In order to solve the above problems, an attempt was made to manufacture non-oriented electrical steel sheets with excellent magnetism and strength by controlling the cooling speed of the cold-rolled sheet annealing process, and however, this has the problem that it is difficult to apply to mass production processes due to increased material non-uniformity caused by the inclusion of unrecrystallized portions. Besides this, most of the technologies previously proposed to simultaneously improve magnetism and strength are not being used due to reasons such as increased manufacturing costs, decreased productivity and yield, and insufficient improvement effects.

### [Disclosure]

An embodiment of the present invention provides a non-oriented electrical steel sheet and a method for manufacturing the same. Specifically, an embodiment of the present invention provides a non-oriented electrical steel sheet having improved magnetism by developing grains having a specific orientation through thermal history control during hot-rolled sheet annealing, and a method for manufacturing the same.

An embodiment of the present invention provides a non-oriented electrical steel sheet including: in wt%, Si: 2.5 to 4.5%, Al: 0.1 to 1.5%, Mn: 0.1 to 0.5%, with the balance being Fe and inevitable impurities.

The non-oriented electrical steel sheet according to the embodiment of the present invention has a {111}//ND orientation fraction is 20 area% or less, wherein {111}//ND refers to a grain whose {111} plane is parallel to a rolling plane (ND plane) within 15°.

In the non-oriented electrical steel sheet according to the embodiment of the present invention, when a texture is represented by ODF, an orientation having the highest intensity is positioned within 10° of {001}<130>.

The non-oriented electrical steel sheet according to the embodiment of the present invention may further include one or more of Sn, Sb, C, N, Ti, Nb, and V, each in an amount of 0.0050 wt% or less.

The non-oriented electrical steel sheet according to the embodiment of the present invention may further include at least one of S: 0.0005 to 0.0050 wt%, Mg: 0.0025 wt% or less, and Cu: 0.01 wt% or less.

The non-oriented electrical steel sheet according to the embodiment of the present invention may further include at least one of P: 0.05 wt% or less, B: 0.002 wt% or less, Mo: 0.01 wt% or less, Cr: 0.5 wt% or less, and Zr: 0.005 wt% or less.

The non-oriented electrical steel sheet according to the embodiment of the present invention may have an average grain size of 50 to 150 µm.

The non-oriented electrical steel sheet according to the embodiment of the present invention may have a distribution density of MgS precipitates with a diameter of 100 nm or less of 0.01 precipitates/µm² or less.

Another embodiment of the present invention provides a method for manufacturing a non-oriented electrical steel sheet, including: a step of hot rolling a slab including, in wt%, Si: 2.5 to 4.5%, Al: 0.1 to 1.5%, Mn: 0.1 to 0.5%, with the balance being Fe and inevitable impurities, to manufacture a hot-rolled sheet; a step of hot-rolled sheet annealing the hot-rolled sheet; a step of cold rolling the hot-rolled sheet to manufacture a cold-rolled sheet; and a step of cold-rolled sheet annealing the cold-rolled sheet.

The step of annealing the hot-rolled sheet includes a heating step of heating the hot-rolled sheet to a first soaking temperature (T₁) of 980°C to 1100°C at a heating rate of 30°C/s or higher, a first soaking step of maintaining the temperature within a range of 10°C of the first soaking temperature (T₁) for 20 to 60 seconds, a cooling step of passing from the first soaking temperature (T₁) to a second soaking temperature (T₂) of 750°C to 850°C within 30 seconds, and a second soaking step of maintaining the temperature within a range of 10°C of the second soaking temperature (T₂) for 30 to 90 seconds.

The heating step may be performed for 40 to 100 seconds.

The step of annealing cold rolled sheet may be performed in an atmosphere having a mixed gas of hydrogen (H₂) and nitrogen (N₂) and a dew point of -10°C or lower.

The step of annealing the cold rolled sheet may include a heating step of heating at a heating rate of 25°C/s or more.

The step of annealing the cold rolled sheet may include a soaking step of soaking at a soaking temperature of 900 to 1100 °C.

The non-oriented electrical steel sheet according to the embodiment of the present invention may have even better characteristics by optimizing the crystal orientation and improving the anisotropy of magnetic flux density.

Ultimately, the non-oriented electrical steel sheet according to an embodiment of the present invention contributes to the manufacture of environmentally-friendly automobile motors, high-efficiency home appliance motors, and super premium-grade electric motors.

### [Description of the Drawings]

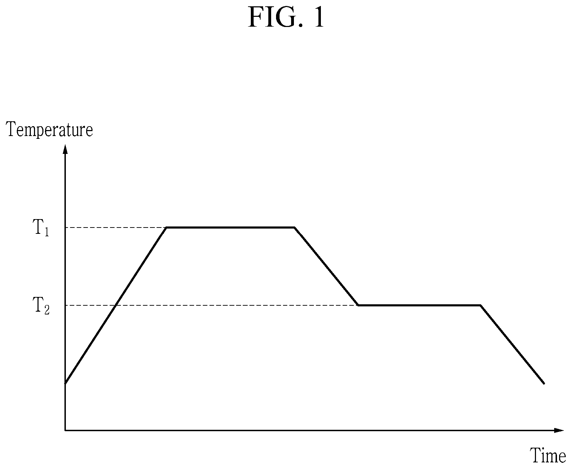

FIG. 1 is a graph schematically showing a time-dependent thermal history in a hot-rolled sheet annealing process according to an embodiment of the present invention.

### [Mode for Invention]

It will be understood that, although the terms first, second, third, etc. may be used herein to describe various elements, components, regions, layers, and/or sections, they are not limited thereto. These terms are only used to distinguish one element, component, region, layer, or section from another element, component, region, layer, or section. Therefore, a first part, component, area, layer, or section to be described below may be referred to as second part, component, area, layer, or section within the range of the present invention.

The technical terms used herein are to simply mention a particular embodiment and are not meant to limit the present invention. An expression used in the singular encompasses an expression of the plural, unless it has a clearly different meaning in the context. In the specification, it is to be understood that the terms such as "including", "having", etc., are intended to indicate the existence of specific features, regions, numbers, stages, operations, elements, components, and/or combinations thereof disclosed in the specification, and are not intended to preclude the possibility that one or more other features, regions, numbers, stages, operations, elements, components, and/or combinations thereof may exist or may be added.

When referring to a part as being "on" or "above" another part, it may be positioned directly on or above the other part, or another part may be interposed therebetween. In contrast, when referring to a part being "directly above" another part, no other part is interposed therebetween.

Unless otherwise stated, % means wt%, and 1 ppm is 0.0001 wt%.

In embodiments of the present invention, inclusion of an additional element means replacing the remaining iron (Fe) by an additional amount of the additional elements.

Unless otherwise defined, all terms used herein, including technical or scientific terms, have the same meanings as those generally understood by those with ordinary knowledge in the field of art to which the present invention belongs. Terms defined in commonly used dictionaries are further interpreted as having meanings consistent with the relevant technical literature and the present disclosure, and are not to be construed as having idealized or very formal meanings unless defined otherwise.

The present invention will be described more fully hereinafter with reference to the accompanying drawings, in which embodiments of the invention are shown. As those skilled in the art would realize, the described embodiments may be modified in various different ways, all without departing from the spirit or scope of the present invention.

A non-oriented electrical steel sheet according to an embodiment of the present invention includes, in wt%, Si: 2.5 to 4.5%, Al: 0.1 to 1.5%, and Mn: 0.1 to 0.5%.

Hereinafter, the reason for limiting the components of the non-oriented electrical steel sheet will be described.

### Si: 2.5 to 4.5 wt%

Silicon (Si) increases the specific resistance of the material, lowers iron loss, and increases strength through solid solution strengthening. if too little Si is added, an effect of improving the iron loss and strength may be insufficient. If too much Si is added, brittleness of the material increases, and rolling productivity is rapidly deteriorated, and an oxide layer and an oxide on a surface that are harmful to magnetism may be formed. Accordingly, Si may be included in an amount of 2.5 to 4.5 wt%. More specifically, it may be included in an amount of 2.7 wt% to 4.0 wt%. Even more specifically, it may be included in an amount of 3.0 wt% to 3.7 wt%.

### Al: 0.1 to 1.5 wt%

Aluminum (Al) increases the specific resistance of the material, lowers iron loss, and increases strength through solid solution strengthening. **If** too little Al is added, fine nitrides may be formed, making it difficult to obtain the effect of improving magnetism. If too much Al is added, the nitride is excessively formed, deteriorating the magnetism, and causing problems in all processes such as steel making and continuous casting, which may considerably reduce productivity. Accordingly, Al may be included in an amount of 0.1 to 1.5 wt%. More specifically, it may be included in an amount of 0.3 wt% to 1.2 wt%. More specifically, it may be included in an amount of 0.5 to 1.0 wt%.

### Mn: 0.1 to 0.5 wt%

Manganese (Mn) improves the iron loss by increasing the specific resistance of the material and serves to form a sulfide. If too little Mn is added, the sulphide is finely formed, causing magnetic deterioration, and when too much Mn is added, fine MnS is excessively precipitated and the formation of a {111} texture unfavorable to magnetism is promoted, resulting in a rapid decrease in magnetic flux density. Therefore, Mn may be included in an amount ranging from 0.1 wt% to 0.5 wt%. More specifically, it may be included in an amount of 0.2 wt% to 0.4 wt%.

A non-oriented electrical steel sheet according to an embodiment of the present invention may further include one or more of Sn, Sb, C, N, Ti, Nb, and V, each in an amount of 0.0050 wt% or less.

### One or more of Sn and Sb: each 0.0050 wt% or less (excluding 0%)

Tin (Sn) and antimony (Sb) preferentially segregate at grain boundaries, slowing down the grain boundary segregation behavior of S and causing surface defects due to excessive overall surface segregation, so in an embodiment of the present invention, it is advantageous to include them in small amounts in the steel composition. If Sn and Sb are added in an excessively large amount, they may cause surface defects. Therefore, one or more of Sn and Sb may be included in an amount of 0.0050 wt% or less each. More specifically, each of them may be included in an amount of 0.0001 to 0.00050 wt%. More specifically, each of them may be included in an amount of 0.0010 to 0.0030 wt%.

### C: 0.0050 wt% or less

Carbon (C) causes magnetic aging and combines with other impurity elements to form carbides, which deteriorates magnetic properties, but improves strength by hindering dislocation movement. If too much C is included, the fine carbide fraction may increase, which may deteriorate the magnetism. Accordingly, C may be included in an amount of 0.0050 wt% or less. The lower limit of C is not particularly limited, but considering productivity, it may be included in an amount of 0.0010 wt% or more. That is, C may be included in an amount of 0.0010 wt% to 0.0050 wt%. More specifically, it may be included in an amount of 0.0010 wt% to 0.0030 wt%.

### N: 0.0050 wt% or less

Nitrogen (N) not only forms fine AIN precipitates inside the base material, but also combines with other impurities to form fine precipitates, suppressing grain growth and worsening iron loss. Accordingly, N may be included in an amount of 0.0050 wt% or less. The lower limit of N is not particularly limited, but since N helps improve strength, the lower limit may be set to 0.0003 wt%. That is, N may be included in an amount of 0.0003 to 0.0050 wt%. More specifically, it may be included in an amount of 0.0010 wt% to 0.0030 wt%.

### Ti, Nb, V: each 0.0050 wt% or less

Titanium (Ti), niobium (Nb), and vanadium (V) have a strong tendency to form precipitates inside the steel, and they deteriorate the iron loss by forming fine carbides, nitrides, or sulfides inside the base material, thereby suppressing grain growth and domain wall movement. Therefore, the contents of Ti, Nb, and V can each be 0.0050 wt% or less. The lower limit thereof is not particularly limited, but it may be set at 0.0003 wt% due to steelmaking costs. That is, Ti, Nb, and V can each be included in an amount of 0.0003 to 0.0050 wt%. More specifically, Ti, Nb, and V may each be included in an amount of 0.0003 to 0.0030 wt%.

A non-oriented electrical steel sheet according to an embodiment of the present invention may further include at least one of S: 0.0005 to 0.0050 wt%, Mg: 0.0025 wt% or less, and Cu: 0.01 wt% or less.

### S: 0.0005 to 0.0050 wt%

Sulfur (S) forms fine precipitates, MnS and CuS, which worsen magnetic properties and hot workability. Therefore, S may be included in an amount of 0.0050 wt% or less. However, in an embodiment of the present invention, it helps in the development of grains having a specific orientation and helps in improving the magnetic flux density, so it may be added in an amount of 0.0005 wt% or more in the embodiment of the present invention. More specifically, S may be included in an amount of 0.0010 to 0.0030 wt%.

### Mg: 0.0025 wt% or less

Magnesium (Mg) is an element that mainly combines with sulfur to form sulfides, and may affect the surface oxide layer of iron. Therefore, Mg may be included in an amount of 0.0025 wt% or less. The lower limit thereof is not particularly limited, but it may be set at 0.0001 wt% due to steelmaking costs. That is, Mg may be included in an amount of 0.0001 to 0.0025 wt%. More specifically, it may be included in an amount of 0.0005 wt% to 0.0020 wt%.

### Cu: 0.01 wt% or less

Copper (Cu) serves to form sulfides together with Mn. If Cu is added further, if too little Cu is added, CuMnS may be finely precipitated and magnetism may be degraded. If too much Cu is added, high temperature brittleness occurs, which may form cracks during casting or hot rolling. Specifically, Cu may be included in an amount of 0.001 to 0.01 wt%.

A non-oriented electrical steel sheet according to an embodiment may further include at least one of P: 0.05 wt% or less, B: 0.002 wt% or less, Mo: 0.01 wt% or less, Cr: 0.5 wt% or less, and Zr: 0.005 wt% or less.

### P: 0.050 wt% or less

Phosphorus (P) deteriorates hot working characteristics, thereby deteriorating productivity compared to improving magnetic properties. Therefore, P may be included in an amount of 0.050 wt% or less. The lower limit thereof is not particularly limited, but it may be set to 0.005% because it segregates on the surface and grain boundaries of the steel sheet to suppress surface oxidation during annealing, hinders diffusion of elements through grain boundaries, and improves the texture by hindering recrystallization in the {111}//ND orientation. That is, P may be included in an amount of 0.005 to 0.050 wt%.

### B: 0.002 wt% or less

If boron (B) is added in excessive amounts, it may cause deterioration of magnetism through the formation of inclusions in the steel. Therefore, B may be included in an amount of 0.002 wt% or less. The lower limit thereof is not particularly limited, but it may be set at 0.0001 wt% due to steelmaking costs. That is, B may be included in an amount of 0.0001 to 0.0020 wt%.

### Mo: 0.01 wt% or less

If molybdenum (Mo) is added in excessive amounts, the effect of improving the texture may be reduced by suppressing the segregation of Sn and P. Therefore, Mo may be included in an amount of 0.01 wt% or less. The lower limit thereof is not particularly limited, but it may be included in an amount of 0.001 wt% or more because it serves to improve the texture by segregating on the surface and grain boundaries. That is, Mo may be included in an amount of 0.001 to 0.010 wt%.

### Cr: 0.50 wt% or less

Chromium (Cr) serves to improve iron loss by increasing specific resistance. If too much Cr is included, the magnetic flux density may deteriorate. More specifically, when Cr is further included, 0.01 to 0.10 wt% of Cr may be included.

### Zr: 0.005 wt% or less

If zirconium (Zr) is added in excessive amounts, it may cause deterioration of magnetism through the formation of inclusions in the steel. Therefore, Zr may be included in an amount of 0.005 wt% or less. The lower limit thereof is not particularly limited, but it may be set at 0.0001 wt% due to steelmaking costs. That is, Zr may be included in an amount of 0.0001 to 0.0050 wt%.

The balance includes Fe and inevitable impurities. The inevitable impurities are impurities mixed in the steel-making and the manufacturing process of the non-oriented electrical steel sheet, which are widely known in the field, and thus a detailed description thereof will be omitted. In the embodiment of the present invention, the addition of elements other than the above-described alloy components is not excluded, and various elements may be included within a range that does not hinder the technical concept of the present invention. When the additional elements are further included, they replace the balance of Fe.

The non-oriented electrical steel sheet according to the embodiment of the present invention may have an average grain size of 50 to 150 µm. When an appropriate average grain size is secured, magnetism may be improved. In particular, it may improve high-frequency iron loss. In an embodiment of the present invention, the grain size means the diameter of a virtual circle having the same area as the grain area. The average grain size may be calculated as 2×(measured area ÷ number of grains ÷ π)^{0.5}. The grain size may be measured based on the rolling vertical plane (TD plane). The measurement position is not particularly limited, but it may be measured at a point 1/4 to 3/4 of the total thickness of the steel sheet. More specifically, the average grain size may be 60 to 95 µm.

A non-oriented electrical steel sheet according to an embodiment of the present invention may have a distribution density of MgS precipitates with a diameter of 100 nm or less of 0.01 precipitates/µm² or less.

MgS precipitates with a diameter of 100 nm or less are segregated at grain boundaries, which reduces the effective content of S that improves the texture, significantly reducing the effect of improving the texture and thus adversely affecting magnetism, and therefore, it is advantageous to suppress them as much as possible. MgS precipitates refer to particles precipitated by the aggregation of Mg and S, and refer to portions where the content of Mg and S is higher compared to the base level of the steel sheet. Precipitates may be measured using a transmission electron microscope (TEM). It refers to the diameter of a virtual circle, assuming the same as the grain size, and may be measured based on the rolling vertical plane (TD plane). The lower limit of the diameter of the precipitates is not particularly limited, but it may be 1 nm due to measurement limitations. MgS precipitates exceeding 100 nm are coarse and do not have a significant effect on magnetism, so they are not separately limited. The distribution density of MgS precipitates may be more specifically 0.001 to 0.007/µm².

A non-oriented electrical steel sheet according to an embodiment of the present invention has an area fraction of {111}//ND orientation of 20 area% or less, and in this case, {111}//ND means a grain in which the {111} plane of the grain is parallel to the rolling plane (ND plane) within 15°. As the orientation fraction of {111}//ND increases, the magnetocrystalline anisotropy energy increases, requiring more energy for magnetization, thus deteriorating magnetic properties, so it is necessary to reduce the {111}//ND fraction. The {111}//ND fraction may be measured by EBSD on a sufficiently large area containing 10,000 grains or more. More specifically, the {111}//ND orientation fraction may be 3 to 16 area%.

In a non-oriented electrical steel sheet according to an embodiment of the present invention, when the texture is expressed as ODF, the orientation having the highest strength may be positioned within 10° of {001}<130>. This means that a large number of grains with orientations near {001} are formed, and {001}<130> is the orientation with the best circumferential average magnetism, and among them, it has low anisotropy, which may help to evenly exhibit excellent magnetism in all directions. The orientation with the highest intensity can be confirmed by representing the data measured by EBSD as an ODF. More specifically, the orientation with the highest intensity may be positioned in the range of 2° to 8° in {001}<130>.

The non-oriented electrical steel sheet according to the embodiment of the present invention has excellent anisotropy of magnetic flux density and excellent high-frequency iron loss. When manufacturing an environmentally-friendly vehicle driving motor using a non-oriented electrical steel sheet according to an embodiment of the present invention, it is advantageous because it has excellent magnetic properties uniformly in all directions within the plane without adding elements such as Sn and Sb.

Specifically, the core loss (W_{10/400}) of the non-oriented electrical steel sheet may be 13.5 W/kg or less based on a thickness of 0.25 mm, the magnetic flux density (B_{50(90°)}) measured in the direction perpendicular to the rolling direction may be 1.64 T or more, the magnetic flux density (B_{50(55°)}) measured in the direction forming a 55° angle with the rolling direction may be 1.63 T or more, and B50(55°)/B50(90°) may be 0.98 or more. The iron loss (W_{10/400}) is iron loss when a magnetic flux density of 1.0 T is induced at a frequency of 400 Hz. The magnetic flux density (B₅₀) is magnetic flux density induced in a magnetic field of 5000 A/m. More specifically, the core loss (W_{10/400}) of the non-oriented electrical steel sheet may be 10.0 to 13.3 W/kg, the magnetic flux density (B_{50(90°)}) measured in the direction perpendicular to the rolling direction may be 1.64 to 1.67 T, the magnetic flux density (B_{50(55°)}) measured in the direction forming a 55° angle with the rolling direction may be 1.63 to 1.66 T, and B50(55°)/B50(90°) may be 0.990 to 0.999.

A method for manufacturing a non-oriented electrical steel sheet according to an embodiment of the present invention includes a step of hot-rolling a slab to manufacture a hot-rolled sheet; a step of hot-rolled-sheet-annealing the hot-rolled sheet; a step of cold-rolling the hot-rolled sheet to manufacture a cold-rolled sheet; and a step of cold-rolled-sheet-annealing the cold-rolled sheet.

First, the slab is hot-rolled.

The alloy composition of the slab has been described in the alloy composition of the non-oriented electrical steel sheet described above, so duplicate descriptions will be omitted. Since the alloy composition does not substantially change during the manufacturing process of the non-oriented electrical steel sheet, the alloy composition of the non-oriented electrical steel sheet and the slab are substantially the same.

Specifically, the slab includes, in wt%, Si: 2.5 to 4.5%, Al: 0.1 to 1.5%, Mn: 0.1 to 0.5%, with the balance being Fe and inevitable impurities.

Other additional elements have been described in the alloy composition of the non-oriented electrical steel sheet, so duplicate descriptions will be omitted.

The slab may be heated before hot-rolling. The heating temperature of the slab is not limited, but the slab may be heated at 1,200 °C or less. When the slab heating temperature is too high, precipitates such as AIN and MnS present in the slab are re-dissolved and then finely precipitated during hot-rolling and annealing, thereby inhibiting grain growth and reducing magnetism.

Next, the slab is hot-rolled to manufacture the hot-rolled sheet. A thickness of the hot-rolled sheet may be 1.8 to 2.3 mm. In the manufacturing of the hot-rolled sheet, a finish rolling temperature may be 800 °C or higher. Specifically, it may be 800 to 1,000 °C. The hot-rolled sheet may be wound at temperatures of 700 °C or less.

After the step of manufacturing the hot-rolled sheet, the hot-rolled sheet is annealed. FIG. 1 is a graph schematically showing a time-dependent thermal history in the hot-rolled-sheet-annealing process.

As shown in FIG. 1, the step of annealing the hot-rolled sheet includes a heating step of heating the hot-rolled sheet to a first soaking temperature (T₁) of 980°C to 1100°C at a heating rate of 30°C/s or higher, a first soaking step of maintaining the temperature within a range of 10°C of the first soaking temperature (T₁) for 20 to 60 seconds, a cooling step of passing from the first soaking temperature (T₁) to a second soaking temperature (T₂) of 750°C to 850°C within 30 seconds, and a second soaking step of maintaining the temperature within a range of 10°C of the second soaking temperature (T₂) for 30 to 90 seconds.

In this case, the temperature of each step refers to the temperature of the steel sheet surface in each step.

The hot-rolled sheet is heated to the first soaking temperature (T₁) of 980°C to 1100°C at a heating rate of 30°C/s or higher. Rapidly increasing the temperature of hot-rolled sheet annealing at a heating rate of 30°C/s or higher helps improve the texture. More specifically, the temperature may be increased at a heating rate of 35 to 150°C/s. It is also possible to heat above the first soaking temperature (T₁) and then cool down to the first soaking temperature (T₁).

The heating step may be performed for 40 to 100 seconds from a starting temperature of 10 to 50°C. In this case, the heating rate may be the average heating rate per second from the starting temperature to the ending temperature. At temperatures below the starting temperature, rapid heating may be performed after heating at a general heating rate of less than 30°C/s.

Next, in the first soaking step, the temperature is maintained within a range of 10°C of the first soaking temperature (T₁) for 20 to 60 seconds. The first soaking temperature (T₁) may be any temperature between 980°C and 1100°C, and the annealing may be performed for 20 to 60 seconds while maintaining a constant temperature within a range of 10°C. If the first soaking temperature is too low or the time is too short, the grains may not grow sufficiently, so that the {111}//ND orientation may develop strongly during the recrystallization annealing step after cold rolling, which may deteriorate the magnetism. If the first soaking temperature is too high or the time is too long, an orientation far from {001}<130> may develop during recrystallization annealing after cold rolling, which may deteriorate the magnetism. More specifically, the first soaking temperature (T₁) may be 1000°C to 1050°C, and may be maintained for 30 to 50 seconds. The temperature may be maintained within a range of 5°C of the first soaking temperature.

Next, in the cooling step, it passes from the first soaking temperature (T₁) to the second soaking temperature (T₂) of 750°C to 850°C within 30 seconds. If the duration of the cooling step is too long, the texture improvement may not be sufficient. More specifically, the cooling step may be performed for 5 to 20 seconds.

Next, in the second soaking step, the temperature is maintained within a range of 10°C of the second soaking temperature (T₂) of 750°C to 850°C for 30 to 90 seconds. If the second soaking temperature is too low or the time is too short, S may not segregate sufficiently at the grain boundaries, which may reduce the texture improvement effect. If the second soaking temperature is too high or the time is too long, fine MgS precipitates may form, which may deteriorate the magnetism. More specifically, the second soaking temperature (T₂) may be 780°C to 830°C, and may be maintained for 45 to 80 seconds. It may be maintained within a range of 5°C of the second soaking temperature.

After the second soaking step, cooling is performed as necessary.

Next, the hot-rolled sheet is cold-rolled to manufacture a cold-rolled sheet. The cold-rolling is finally performed to a thickness of 0.1mm to 0.35 mm. In the cold-rolling, the reduction ratio may be adjusted to 85 % or more. Specifically, the reduction ratio may be 85 to 95 %. When the reduction ratio is too low, a thickness difference in the width direction of the steel sheet may occur.

Next, the cold-rolled sheet is subjected to cold-rolled sheet annealing. The cold rolled sheet annealing step can be performed in an atmosphere having a mixed gas of hydrogen (H₂) and nitrogen (N₂) and a dew point of -10°C or lower. By annealing in an atmosphere with a low dew point, surface oxidation may be suppressed and surface segregation of S may be promoted, thereby forming an excellent texture throughout the thickness. More specifically, the dew point may be -10 to -50°C. More specifically, it may be -15 to -45°C. The mixed gas may contain 40 vol% or less of hydrogen and 60 vol% or more of nitrogen. The atmosphere may be applied equally in the heating step and the soaking step described later.

The cold-rolled sheet annealing step includes a heating step of heating from a starting temperature of 20 to 50°C to a soaking temperature at a heating rate of 25°C/s or more. By rapidly increasing the temperature during the cold-rolled sheet annealing, the texture may be improved. More specifically, the temperature may be increased at a heating rate of 35 to 150°C/s.

The cold-rolled sheet annealing step may include a soaking step of soaking at a soaking temperature of 900 to 1100 °C. If the soaking temperature is too low, the grains may not grow sufficiently, or the deformed structure may remain, which may deteriorate the iron loss. If the cracking temperature is too high, the eddy current loss may increase, and the the {001}<130> orientation may decrease, which may deteriorate the magnetic properties. More specifically, soaking may be performed at a soaking temperature of 950 to 1050°C. Annealing may be performed at the soaking temperature for 30 to 50 seconds.

In the cold-rolled sheet annealing process, the processed texture formed in the cold-rolling step may be entirely (that is, 99 % or more) recrystallized.

After the cold-rolled sheet annealing, an insulating film may be formed. The insulating film may be formed as an organic, inorganic, and organic/inorganic composite film, and it may be formed with other insulating coating materials.

Hereinafter, the present invention will be described in more detail through examples. However, the examples are only for illustrating the present invention, and the present invention is not limited thereto.

### Example 1

A slab was manufactured with components containing the following Table 1 and Table 2 and the balance Fe and other inevitable impurities. This was heated at 1150 °C and hot-rolled at a finishing temperature of 880 °C to manufacture a hot-rolled sheet with a thickness of 2.0 mm. The hot-rolled sheet was subjected to first and second hot-rolled sheet annealings under the conditions shown in Table 3, and then cold-rolled to a thickness of 0.25 mm. This was then subjected to cold-rolled sheet annealing under the conditions shown in Table 4.

The average grain diameter, the density of MgS precipitates of 100 nm or less, the {111}//ND orientation fraction, and the angle difference of {001}<130> for each specimen are summarized in Table 4.

The average grain size was measured by EBSD by polishing the TD cross-section of the specimen to ensure an area of 100 mm² or more, merging them with the Merge function of the OIM software, and calculating them with the Grain Size (diameter) function, using the Average Number and Area fraction values.

The density of MgS precipitates of 100 nm or less was calculated by dividing the number of precipitates that appeared when a TEM specimen was manufactured using the replica method from a final annealed sheet and an area of 10000 µm² or more was observed by TEM, among which the length of the longest line segment across the shape was 100 nm or more and when the components were analyzed by EDS, peaks of Mg and S appeared simultaneously, by the measured area.

The {111}//ND orientation fraction was obtained as the fraction value appearing in the partition summary information when EBSD measurement data was partitioned in OIM software so that ND has the <111> orientation within an error angle of 15 degrees.

The angle difference of {001}<130> was obtained by calculating the ODF from EBSD data to derive the orientation with the maximum intensity, and calculating the misorientation value between that orientation and the {001}<130> orientation.

The magnetic properties such as the magnetic flux density and the iron loss were measured by cutting 60 mm width × 60 mm length × 5 sheets of each specimen, and measuring the iron loss in the rolling direction and the direction perpendicular to the rolling using a single sheet tester, and the average value is shown. The magnetic flux density was measured in the rolling vertical direction and in a direction forming a 55° angle with the rolling direction.

In this case, W_{10/400} is iron loss when a magnetic flux density of 1.0 T is induced at a frequency of 400 Hz, and B₅₀ is a magnetic flux density induced in a magnetic field of 5000 A/m.

**(Table 1)**

| Specimen Number | Si [%] | Al [%] | Mn [%] | Sn [ppm] | Sb [ppm] | C [ppm] | N [ppm] |
|---|---|---|---|---|---|---|---|
| A1 | 2.7 | 1.40 | 0.45 | 17 | 18 | 28 | 16 |
| A2 | 2.7 | 1.40 | 0.45 | 14 | 16 | 28 | 13 |
| A3 | 2.7 | 1.40 | 0.45 | 17 | 17 | 20 | 18 |
| A4 | 2.7 | 1.40 | 0.45 | 11 | 13 | 13 | 17 |
| A5 | 2.7 | 1.40 | 0.45 | 14 | 14 | 17 | 14 |
| A6 | 2.7 | 1.40 | 0.45 | 14 | 18 | 24 | 17 |
| A7 | 2.7 | 1.40 | 0.45 | 11 | 23 | 26 | 13 |
| A8 | 2.7 | 1.40 | 0.45 | 13 | 9 | 14 | 16 |
| B1 | 3.3 | 0.95 | 0.30 | 19 | 10 | 13 | 14 |
| B2 | 3.3 | 0.95 | 0.30 | 20 | 21 | 35 | 15 |
| B3 | 3.3 | 0.95 | 0.30 | 17 | 13 | 16 | 9 |
| B4 | 3.3 | 0.95 | 0.30 | 14 | 17 | 17 | 12 |
| B5 | 3.3 | 0.95 | 0.30 | 13 | 18 | 13 | 13 |
| B6 | 3.3 | 0.95 | 0.30 | 18 | 13 | 28 | 16 |
| B7 | 3.3 | 0.95 | 0.30 | 14 | 17 | 29 | 14 |
| B8 | 3.3 | 0.95 | 0.30 | 13 | 13 | 31 | 18 |
| C1 | 3.6 | 0.75 | 0.20 | 18 | 14 | 30 | 9 |
| C2 | 3.6 | 0.75 | 0.20 | 23 | 11 | 21 | 11 |
| C3 | 3.6 | 0.75 | 0.20 | 9 | 13 | 29 | 12 |
| C4 | 3.6 | 0.75 | 0.20 | 10 | 19 | 21 | 8 |
| C5 | 3.6 | 0.75 | 0.20 | 21 | 20 | 31 | 13 |
| C6 | 3.6 | 0.75 | 0.20 | 18 | 13 | 28 | 16 |
| C7 | 3.6 | 0.75 | 0.20 | 12 | 23 | 25 | 16 |
| C8 | 3.6 | 0.75 | 0.20 | 8 | 17 | 27 | 17 |
| D1 | 4.2 | 0.20 | 0.30 | 13 | 9 | 22 | 8 |
| D2 | 4.2 | 0.20 | 0.30 | 16 | 7 | 17 | 11 |
| D3 | 4.2 | 0.20 | 0.30 | 20 | 14 | 14 | 10 |
| D4 | 4.2 | 0.20 | 0.30 | 13 | 18 | 9 | 14 |
| D5 | 4.2 | 0.20 | 0.30 | 16 | 12 | 16 | 16 |
| D6 | 4.2 | 0.20 | 0.30 | 21 | 12 | 21 | 20 |
| D7 | 4.2 | 0.20 | 0.30 | 16 | 14 | 16 | 20 |
| D8 | 4.2 | 0.20 | 0.30 | 17 | 12 | 31 | 12 |

**(Table 2)**

| Specimen Number | Ti [ppm] | Nb [ppm] | V [ppm] | S [ppm] | Mg [ppm] | Cu [ppm] |
|---|---|---|---|---|---|---|
| A1 | 11 | 19 | 15 | 2 | 18 | 79 |
| A2 | 23 | 17 | 21 | 17 | 15 | 85 |
| A3 | 24 | 8 | 19 | 38 | 14 | 83 |
| A4 | 17 | 18 | 10 | 18 | 11 | 74 |
| A5 | 14 | 16 | 16 | 16 | 13 | 80 |
| A6 | 17 | 17 | 14 | 43 | 19 | 78 |
| A7 | 11 | 13 | 13 | 13 | 12 | 77 |
| A8 | 14 | 14 | 18 | 14 | 13 | 82 |
| B1 | 12 | 11 | 23 | 11 | 16 | 87 |
| B2 | 9 | 13 | 9 | 13 | 14 | 73 |
| B3 | 24 | 19 | 10 | 32 | 32 | 74 |
| B4 | 14 | 20 | 21 | 20 | 18 | 85 |
| B5 | 17 | 13 | 18 | 13 | 11 | 82 |
| B6 | 14 | 17 | 15 | 17 | 12 | 79 |
| B7 | 13 | 18 | 17 | 42 | 14 | 81 |
| B8 | 18 | 13 | 13 | 13 | 9 | 77 |
| C1 | 24 | 19 | 20 | 19 | 16 | 84 |
| C2 | 21 | 23 | 16 | 37 | 21 | 80 |
| C3 | 23 | 14 | 12 | 71 | 12 | 76 |
| C4 | 17 | 18 | 18 | 18 | 18 | 82 |
| C5 | 9 | 14 | 11 | 45 | 11 | 75 |
| C6 | 13 | 15 | 12 | 15 | 12 | 76 |
| C7 | 7 | 17 | 15 | 17 | 17 | 79 |
| C8 | 14 | 14 | 18 | 42 | 14 | 82 |
| D1 | 18 | 9 | 23 | 9 | 17 | 87 |
| D2 | 12 | 16 | 11 | 16 | 13 | 75 |
| D3 | 12 | 21 | 13 | 35 | 16 | 128 |
| D4 | 14 | 16 | 14 | 16 | 16 | 78 |
| D5 | 16 | 17 | 17 | 17 | 14 | 81 |
| D6 | 15 | 18 | 21 | 33 | 13 | 85 |
| D7 | 10 | 17 | 24 | 17 | 18 | 88 |
| D8 | 13 | 13 | 13 | 13 | 23 | 77 |

**(Table 3)**

| Speci men Numb er | First Soaking | | | Second Soaking | | | Cold-Rolled Sheet Annealing | | |
|---|---|---|---|---|---|---|---|---|---|
| | Heat ing Rate [°C/ s] | Soakin 9 Temper ature [°C] | Maint aining Time [s] | Chan ging Time [s] | Soakin 9 Temper ature [°C] | Maint aining Time [s] | Heat ing Rate [°C/ s] | Soakin 9 Temper ature [°C] | De w Poi nt [°C ] |
| A1 | 40 | 1000 | 50 | 20 | 800 | 50 | 35 | 1000 | -40 |
| A2 | 40 | 1000 | 75 | 20 | 800 | 50 | 35 | 1000 | -40 |
| A3 | 20 | 1000 | 50 | 20 | 800 | 50 | 35 | 1000 | -40 |
| A4 | 40 | 1000 | 50 | 20 | 800 | 50 | 15 | 1000 | -40 |
| A5 | 40 | 1000 | 50 | 20 | 880 | 50 | 35 | 1000 | -40 |
| A6 | 40 | 1000 | 50 | 20 | 800 | 50 | 35 | 1000 | -40 |
| A7 | 40 | 1000 | 50 | 20 | 800 | 50 | 35 | 1000 | -40 |
| A8 | 40 | 1000 | 50 | 20 | 800 | 50 | 35 | 1000 | -40 |
| B1 | 40 | 1000 | 50 | 20 | 800 | 50 | 35 | 870 | -40 |
| B2 | 40 | 1000 | 50 | 20 | 800 | 50 | 35 | 1000 | 5 |
| B3 | 40 | 1000 | 50 | 20 | 800 | 50 | 35 | 1000 | -40 |
| B4 | 40 | 1000 | 50 | 20 | 800 | 20 | 35 | 1000 | -40 |
| B5 | 40 | 1000 | 50 | 20 | 800 | 50 | 35 | 1000 | -40 |
| B6 | 40 | 1000 | 50 | 20 | 800 | 50 | 35 | 1000 | -40 |
| B7 | 40 | 1000 | 50 | 20 | 800 | 50 | 35 | 1000 | -40 |
| B8 | 40 | 1000 | 50 | 20 | 800 | 50 | 35 | 1000 | -40 |
| C1 | 40 | 940 | 30 | 20 | 800 | 75 | 35 | 1000 | -40 |
| C2 | 40 | 1000 | 15 | 20 | 800 | 75 | 35 | 1000 | -40 |
| C3 | 40 | 1000 | 30 | 20 | 800 | 75 | 35 | 1000 | -40 |
| C4 | 40 | 1000 | 30 | 20 | 720 | 75 | 35 | 1000 | -40 |
| C5 | 40 | 1000 | 30 | 20 | 800 | 75 | 35 | 1000 | -40 |
| C6 | 40 | 1000 | 30 | 20 | 800 | 75 | 35 | 1000 | -40 |
| C7 | 40 | 1000 | 30 | 20 | 800 | 75 | 35 | 1000 | -40 |
| C8 | 40 | 1000 | 30 | 20 | 800 | 75 | 35 | 1000 | -40 |
| D1 | 40 | 1130 | 30 | 20 | 800 | 75 | 35 | 1000 | -40 |
| D2 | 40 | 1000 | 30 | 40 | 800 | 75 | 35 | 1000 | -40 |
| D3 | 40 | 1000 | 30 | 20 | 800 | 75 | 35 | 1000 | -40 |
| D4 | 40 | 1000 | 30 | 20 | 800 | 105 | 35 | 1000 | -40 |
| D5 | 40 | 1000 | 30 | 20 | 800 | 75 | 35 | 1000 | -40 |
| D6 | 40 | 1000 | 30 | 20 | 800 | 75 | 35 | 1000 | -40 |
| D7 | 40 | 1000 | 30 | 20 | 800 | 75 | 35 | 1000 | -40 |
| D8 | 40 | 1000 | 30 | 20 | 800 | 75 | 35 | 1000 | -40 |

**(Table 4)**

| Specimen Number | Thick ness [mm] | Avera ge Grain Size [µm] | Fine MgS Density [pieces/µ m²] | {111}//ND Fraction [area%] | Maximum Strength and {001}<130> Error Angle [°] |
|---|---|---|---|---|---|
| A1 | 0.25 | 92 | 0.002 | 25 | 3 |
| A2 | 0.25 | 99 | 0.005 | 15 | 18 |
| A3 | 0.25 | 102 | 0.018 | 13 | 5 |
| A4 | 0.25 | 89 | 0.004 | 24 | 6 |
| A5 | 0.25 | 91 | 0.022 | 15 | 2 |
| A6 | 0.25 | 103 | 0.004 | 14 | 6 |
| A7 | 0.25 | 94 | 0.005 | 15 | 2 |
| A8 | 0.25 | 98 | 0.007 | 16 | 3 |
| B1 | 0.25 | 101 | 0.002 | 14 | 17 |
| B2 | 0.25 | 99 | 0.006 | 15 | 21 |
| B3 | 0.25 | 100 | 0.023 | 25 | 7 |
| B4 | 0.25 | 104 | 0.005 | 23 | 3 |
| B5 | 0.25 | 95 | 0.007 | 15 | 6 |
| B6 | 0.25 | 92 | 0.006 | 16 | 5 |
| B7 | 0.25 | 103 | 0.002 | 14 | 8 |
| B8 | 0.25 | 97 | 0.004 | 14 | 3 |
| C1 | 0.25 | 98 | 0.003 | 27 | 5 |
| C2 | 0.25 | 93 | 0.002 | 25 | 7 |
| C3 | 0.25 | 94 | 0.024 | 16 | 3 |
| C4 | 0.25 | 103 | 0.007 | 24 | 5 |
| C5 | 0.25 | 96 | 0.005 | 15 | 6 |
| C6 | 0.25 | 101 | 0.007 | 14 | 3 |
| C7 | 0.25 | 105 | 0.006 | 14 | 5 |
| C8 | 0.25 | 95 | 0.003 | 15 | 6 |
| D1 | 0.2 | 102 | 0.003 | 15 | 16 |
| D2 | 0.2 | 98 | 0.025 | 16 | 5 |
| D3 | 0.2 | 99 | 0.019 | 16 | 2 |
| D4 | 0.2 | 93 | 0.028 | 15 | 3 |
| D5 | 0.2 | 104 | 0.004 | 14 | 6 |
| D6 | 0.2 | 102 | 0.006 | 16 | 5 |
| D7 | 0.2 | 94 | 0.005 | 16 | 6 |
| D8 | 0.2 | 95 | 0.005 | 15 | 5 |

**(Table 5)**

| Specimen Number | B50 55° [T] | B50 90° [T] | B50 55° /B50 90° | W10/40 0 [W/kg] | Remarks |
|---|---|---|---|---|---|
| A1 | 1.598 | 1.655 | 0.966 | 12.9 | Comparative Example |
| A2 | 1.602 | 1.662 | 0.964 | 11.4 | Comparative Example |
| A3 | 1.594 | 1.657 | 0.962 | 11.5 | Comparative Example |
| A4 | 1.605 | 1.654 | 0.970 | 11.4 | Comparative Example |
| A5 | 1.597 | 1.662 | 0.961 | 13.2 | Comparative Example |
| A6 | 1.651 | 1.658 | 0.996 | 11.6 | Inventive Example |
| A7 | 1.632 | 1.642 | 0.994 | 11.5 | Inventive Example |
| A8 | 1.657 | 1.662 | 0.997 | 11.6 | Inventive Example |
| B1 | 1.603 | 1.658 | 0.967 | 12.8 | Comparative Example |
| B2 | 1.599 | 1.654 | 0.967 | 11.3 | Comparative Example |
| B3 | 1.604 | 1.659 | 0.967 | 11.4 | Comparative Example |
| B4 | 1.602 | 1.657 | 0.967 | 11.6 | Comparative Example |
| B5 | 1.642 | 1.654 | 0.993 | 11.3 | Inventive Example |
| B6 | 1.633 | 1.641 | 0.995 | 11.6 | Inventive Example |
| B7 | 1.647 | 1.658 | 0.993 | 11.5 | Inventive Example |
| B8 | 1.645 | 1.659 | 0.992 | 11.4 | Inventive Example |
| C1 | 1.584 | 1.639 | 0.966 | 11.5 | Comparative Example |
| C2 | 1.589 | 1.644 | 0.967 | 11.5 | Comparative Example |
| C3 | 1.603 | 1.658 | 0.967 | 11.3 | Comparative Example |
| C4 | 1.594 | 1.649 | 0.967 | 11.5 | Comparative Example |
| C5 | 1.647 | 1.657 | 0.994 | 11.4 | Inventive Example |
| C6 | 1.647 | 1.658 | 0.993 | 13.1 | Inventive Example |
| C7 | 1.635 | 1.644 | 0.995 | 11.4 | Inventive Example |
| C8 | 1.632 | 1.643 | 0.993 | 11.5 | Inventive Example |
| D1 | 1.600 | 1.655 | 0.967 | 12.1 | Comparative Example |
| D2 | 1.603 | 1.658 | 0.967 | 10.5 | Comparative Example |
| D3 | 1.602 | 1.657 | 0.967 | 12.3 | Comparative Example |
| D4 | 1.604 | 1.659 | 0.967 | 10.4 | Comparative Example |
| D5 | 1.652 | 1.662 | 0.994 | 11.9 | Inventive Example |
| D6 | 1.641 | 1.653 | 0.993 | 12.0 | Inventive Example |
| D7 | 1.632 | 1.644 | 0.993 | 10.3 | Inventive Example |
| D8 | 1.644 | 1.658 | 0.992 | 10.5 | Inventive Example |

As shown in Table 1 to Table 5, it can be confirmed that when the temperature and time during hot-rolled sheet annealing are appropriately controlled, the {001}<130> crystal orientation is developed, so that the magnetic flux density and iron loss are excellent, and the magnetic flux density anisotropy is excellent.

On the other hand, it can be confirmed that when the temperature and time during the hot-rolled sheet annealing are not properly controlled, the {001}<130> crystal orientation is formed less, the magnetic flux density and iron loss are relatively poor, and the anisotropy of the magnetic flux density is relatively poor.

The present invention may be embodied in many different forms, and should not be construed as being limited to the disclosed embodiments. In addition, it will be understood by those skilled in the art that various changes in form and details may be made thereto without departing from the technical spirit and essential features of the present invention. Therefore, it is to be understood that the above-described embodiments are for illustrative purposes only, and the scope of the present invention is not limited thereto.

## Claims

1. A non-oriented electrical steel sheet comprising:
in wt%, Si: 2.5 to 4.5%, Al: 0.1 to 1.5%, Mn: 0.1 to 0.5%, with the balance being Fe and inevitable impurities,
wherein a {111}//ND orientation fraction is 20 area% or less, where {111}//ND refers to a grain whose {111} plane is parallel to a rolling plane (ND plane) within 15°, and
when a texture is represented by ODF, an orientation having the highest intensity is positioned within 10° of {001}<130>.

2. The non-oriented electrical steel sheet of claim 1, further comprising
at least one of Sn, Sb, C, N, Ti, Nb, and V , each in an amount of 0.0050 wt% or less.

3. The non-oriented electrical steel sheet of claim 1, further comprising
at least one of S: 0.0005 to 0.0050 wt%, Mg: 0.0025 wt% or less, and Cu: 0.01 wt% or less.

4. The non-oriented electrical steel sheet of claim 1, further comprising
at least one of P: 0.05 wt% or less, B: 0.002 wt% or less, Mo: 0.01 wt% or less, Cr: 0.5 wt% or less, and Zr: 0.005 wt% or less.

5. The non-oriented electrical steel sheet of claim 1, wherein
an average grain size is 50 to 150 µm.

6. The non-oriented electrical steel sheet of claim 1, wherein
a distribution density of MgS precipitates having a diameter of 100 nm or less is 0.01 particles/µm² or less.

7. A method for manufacturing a non-oriented electrical steel sheet, comprising:
a step of hot rolling a slab including, in wt%, Si: 2.5 to 4.5%, Al: 0.1 to 1.5%, Mn: 0.1 to 0.5%, with the balance being Fe and inevitable impurities, to manufacture a hot-rolled sheet;
a step of hot-rolled sheet annealing the hot-rolled sheet;
a step of cold rolling the hot-rolled sheet to manufacture a cold-rolled sheet; and
a step of cold-rolled sheet annealing the cold-rolled sheet,
wherein the step of annealing the hot-rolled sheet includes
a heating step of heating the hot-rolled sheet to a first soaking temperature (T₁) of 980°C to 1100°C at a heating rate of 30°C/s or more;
a first soaking step maintained within a range of 10°C of the first soaking temperature (T₁) for 20 to 60 seconds;
a cooling step of passing from the first soaking temperature (T₁) to a second soaking temperature (T₂) of 750°C to 850°C within 30 seconds; and
a second soaking step maintained within a range of 10°C of the second soaking temperature (T₂) for 30 to 90 seconds.

8. The method for manufacturing the non-oriented electrical steel sheet of claim 7, wherein
the heating step is performed for 40 to 100 seconds.

9. The method for manufacturing the non-oriented electrical steel sheet of claim 7, wherein
the step of annealing the cold rolled sheet is performed in an atmosphere having a mixed gas of hydrogen (H₂) and nitrogen (N₂) and a dew point of -10°C or lower.

10. The method for manufacturing the non-oriented electrical steel sheet of claim 7, wherein
the step of annealing the cold rolled sheet includes a heating step of heating at a heating rate of 25°C/s or more.

11. The method for manufacturing the non-oriented electrical steel sheet of claim 7, wherein
the step of annealing the cold rolled sheet includes a soaking step of soaking at a soaking temperature of 900 to 1100 °C.
